# EUROPÄISCHE PATENTSCHRIFT

(11) **EP 1 531 065 B1**
(45) Veröffentlichungstag und Bekanntmachung des Hinweises auf die Patenterteilung: **30.04.2008**
(21) Anmeldenummer: 04104924.8
(22) Anmeldetag: 08.10.2004
(51) Int. Cl.: B60C 13/04, A43C 13/04, A43C 15/16, B29D 30/66

(54) **Spikestift, der zur Bildung eines Spikes in einen Spikekörper einbringbar ist**
Peg-like element to be used for the manufacture of a spike
Pièce en forme de cheville pour la fabrication d'un clou

(30) Priorität: 07.11.2003 DE 10351952
(43) Veröffentlichungstag der Anmeldung: 18.05.2005
(73) Patentinhaber: Continental Aktiengesellschaft, 30165 Hannover (DE)
(72) Erfinder: González Diez, Inocencio, 08029 Barcelona (ES)

(56) Entgegenhaltungen:
- EP-A- 0 518 539
- DE-A1- 2 600 932
- GB-A- 1 209 293
- GB-A- 1 473 967
- US-A- 5 987 784
- PATENT ABSTRACTS OF JAPAN Bd. 007, Nr. 081 (M-205), 5. April 1983 (1983-04-05) & JP 58 008409 A (TOSHIO TAKAYAMA), 18. Januar 1983 (1983-01-18)

## Beschreibung

Die Erfindung betrifft einen Spikestift nach dem Oberbegriff des Anspruchs 1.

Spikes für die Lauffläche eines Fahrzeugreifens, insbesondere eines Winterreifens, aber auch für Schuhsohlen und dergleichen sind in verschiedensten Ausführungen bekannt.

Derartige Spikes bestehen üblicherweise aus einem Spikekörper, der in die Lauffläche des Fahrzeugreifens, der Schuhsohle und dergleichen einbringbar ist, und einem Spikestift, der zur Bildung des Spikes in den Spikekörper eingebracht ist. Der Spikestift besteht aus einem Oberteil und einem Unterteil, wobei das Oberteil nach dem Einbringen des Spikestiftes in den Spikekörper aus dem Spikekörper herausragt. Bei Benutzung der mit den Spikes ausgerüsteten Materialien kommt das Oberteil mit dem Untergrund in Kontakt und sorgt für eine verbesserte Untergrundhaftung der Materialien, insbesondere bei Eis und Schnee. Hierzu ist das Oberteil üblicherweise abgeflacht und weist eine umlaufende Kante auf, die in den Untergrund greift.

Aus der US 5,987,784 A ist ein Spike und ein Spikestift für Schuhsohlen gemäß dem Oberbegriff des Anspruchs 1 bekannt geworden. Der Spikestift weist ein zylinderförmiges Unterteil auf, welches in den Spikekörper einbringbar ist. Es hat sich jedoch gezeigt, dass der Sitz eines Spikestiftes mit zylinderförmigem Unterteil im Spikekörper nicht fest ist, sondern sich bei Kraftbeaufschlagung lockern kann.

Bekannte Spikes sind beispielsweise in der EP 1 199 193 A1 beschrieben. Weiterhin ist aus der GB 1 209 293 A ein Spike für eine Reifenlauffläche bekannt geworden, dessen Spikestift mit zylinderförmigem Unterbau im Spikekörper einen festen Sitz durch eine geeignete vorzugsweise halbkugelförmige Geometrie der Spikestiftspitze und somit der Vermeidung starker Dreh- bzw. Schwenkmomente auf den Spikekörper erhalten soll. Die EP 0 518 539 A1 offenbart einen Spikestift, der für einen festen Sitz im Spikekörper ein zylindrisches oder ein sich nach unten in der Querschnittsfläche vergrößerndes Unterteil aufweist. In der DE 26 00 932 A ist ebenfalls ein Spikestift mit einem zylindrischen Unterteil beschrieben, wobei der Spikestift jedoch in senkrechter Richtung zur Bodenaufstandsfläche federnd im Spikekörper gelagert ist. In der GB 1 473 967 A ist ein weiterer Spikestift mit zylindrischem Unterteil und einer durch Facetten gebildeten, stumpfen Spitze fenbart.

Derartige Spikes und Spikestifte haben jedoch nur einen unzureichend festen Sitz und zusätzlich nur eine relativ kurze Lebensdauer, da die umlaufende Kante des Oberteils relativ schnell abgetragen wird und damit einhergehend der Untergrundgriff herabgesetzt wird. Dadurch verringert sich insgesamt die Untergrundhaftung der mit den Spikes ausgerüsteten Materialien.

Der Erfindung liegt die Aufgabe zugrunde, einen Spikestift und einen Spike bereitzustellen, welche eine verbesserte Lebensdauer und Haltbarkeit aufweisen, insbesondere soll der Sitz des Spikestiftes im Spikekörper gut haltbar sein und somit verbessert werden.

Diese Aufgabe wird bei einem Spikestift durch die Merkmale des Anspruchs 1_{.} Weiterbildungen und vorteilhafte Ausgestaltungen der Erfindung ergeben sich aus den Unteransprüchen.

Der Spikestift, der zur Bildung eines Spikes in einen Spikekörper einbringbar ist, besteht aus einem Oberteil und einem Unterteil, wobei das Oberteil nach dem Einbringen des Spikestiftes in den Spikekörper aus dem Spikekörper herausragt und während der Benutzung des Spikes mit dem Untergrund in Kontakt kommt. Eine Rondiste teilt den Spikestift in Oberteil und Unterteil. Das Oberteil umfasst eine Tafel, eine Kante oder eine Spitze, die im Abstand über der Rondistenebene angeordnet ist. Zwischen Tafel, Kante oder Spitze und der Rondiste ist wenigstens eine Facette ausgebildet.

Die Begriffe Rondiste, Tafel und Facette werden üblicherweise auf dem Gebiet der geschliffenen Edelsteine verwendet. Sie sind jedoch geeignet, die erfindungsgemäßen Gegenstände zu beschreiben, da die Form der erfindungsgemäßen Gegenstände geschliffenen Edelsteinen ähnlich ist.

Hier und im folgenden wird daher unter einer Rondiste der größte horizontale Umfang des Spikestiftes verstanden, welcher gleichzeitig den Spikestift in ein Oberteil und ein Unterteil aufteilt. Die von der Rondiste eingeschlossene Fläche bildet dann die Rondistenebene. Jede Querschnittsfläche des Oberteils und jede Querschnittsfläche des Unterteils ist somit kleiner als die Fläche der Rondistenebene. Hier und im folgenden wird unter einer Tafel die größte durch Kanten begrenzte Fläche auf dem Oberteil verstanden. Unter einer Facette wird hier und im folgenden eine kleine, zur Rondistenebene schräg verlaufende Fläche verstanden.

Durch die erfindungsgemäße Ausgestaltung des Spikestiftes wird eine längere Lebensdauer und Haltbarkeit des Spikestiftes und damit einhergehend des Spikes insgesamt erreicht.

Dadurch, dass das Unterteil des Spikestiftes ausgehend von der Rondistenebene nach unten spitz zuläuft, wird eine gute Haltbarkeit des Spikestiftes im Spikekörper erreicht. Vorzugsweise ist das Unterteil des Spikestiftes nach Art eines Kegels, eines Kegelstumpfes, einer Pyramide oder eines Pyramidenstumpfes ausgebildet ist, wobei das sich im Querschnitt verengende Ende des Unterteils von der Rondistenebene weg weist.

Die längere Lebensdauer ist ebenfalls darauf zurückzuführen, dass die Anzahl der Kanten, die in den Untergrund greifen, durch die Ausgestaltung erhöht ist. Es stehen also mehr Kanten zur Verfügung, auf die sich die übliche Abnutzung verteilt. Die Summe der Längen der einzelnen Kanten lässt sich gegenüber dem Stand der Technik wesentlich steigern.

Eine Weiterbildung der Erfindung sieht vor, dass die Tafel, Kante oder Spitze zentral über der Rondistenebene angeordnet ist. Dadurch wird eine gleichmäßige und verbesserte Abnutzung des Spikestiftes gewährleistet, wenn dieser bei Benutzung in alle Fahrt- oder Laufrichtungen beansprucht wird.

In einer vorteilhaften Ausgestaltung der Erfindung ist die Tafel planparallel und die Kante parallel zur Rondistenebene angeordnet. Dadurch wird eine gleichmäßige und verbesserte Abnutzung des Spikestiftes gewährleistet, wenn dieser bei Benutzung in alle Fahrt- oder Laufrichtungen beansprucht wird.

Die Tafel kann kreisförmig, elliptisch, dreieckig, quadratisch, rechteckig, sechseckig, vieleckig oder sternförmig sein. Je nach Anwendungsgebiet sind dadurch zahlreiche Möglichkeiten gegeben, den Spike hinsichtlich einer verbesserten Untergrundhaftung mit gleichzeitig verbesserter Haltbarkeit auszugestalten.

Die Rondistenebene kann entsprechend kreisförmig, elliptisch, dreieckig, quadratisch, rechteckig, sechseckig, vieleckig oder sternförmig sein. Je nach Anwendungsgebiet sind dadurch ebenfalls zahlreiche Möglichkeiten gegeben, den Spike hinsichtlich einer verbesserten Untergrundhaftung mit gleichzeitig verbesserter Haltbarkeit auszugestalten.

Die Facetten können kreisförmig, elliptisch, dreieckig, quadratisch, rechteckig, sechseckig oder vieleckig sein. Je nach Anwendungsgebiet sind dadurch zahlreiche Möglichkeiten gegeben, den Spike hinsichtlich einer verbesserten Untergrundhaftung mit gleichzeitig verbesserter Haltbarkeit auszugestalten.

Nachfolgend wird die Erfindung anhand von Ausführungsbeispielen erläutert, die in der Zeichnung dargestellt sind. In dieser zeigen:
- Fig. 1 bis 10: jeweils einen erfindungsgemäßen Spikestift in a) Draufsicht auf das Oberteil und in b) Seitenansicht,
- Fig. 11: einen erfindungsgemäßen Spikestift in a) Draufsicht auf das Oberteil, in b) Seitenansicht und in c) Draufsicht auf das Unterteil, und
- Fig. 12 bis 13: jeweils einen erfindungsgemäßen Spikestift in Draufsicht auf das Oberteil.

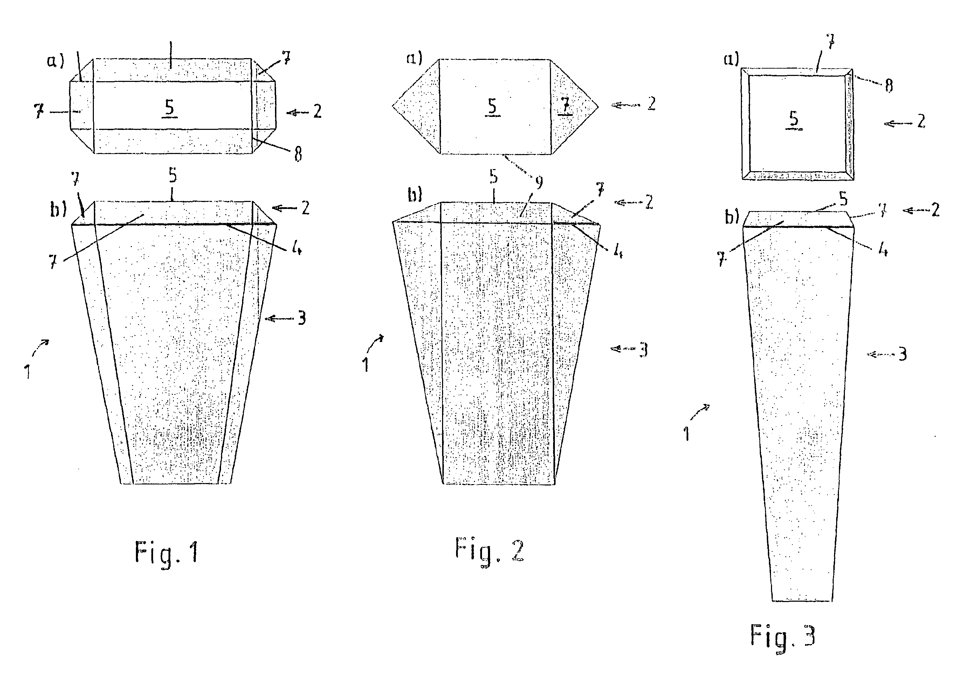

In den Fig. 1 bis 10 ist jeweils ein erfindungsgemäßer Spikestift 1 in a) Draufsicht auf das Oberteil 2 und in b) Seitenansicht dargestellt. Jeder Spikestift 1 umfasst eine Rondiste 4, die den Spikestift 1 in Oberteil 2 und Unterteil 3 teilt. Die Rondiste 4 ist hierbei der größte horizontale Umfang des Spikestiftes 1.

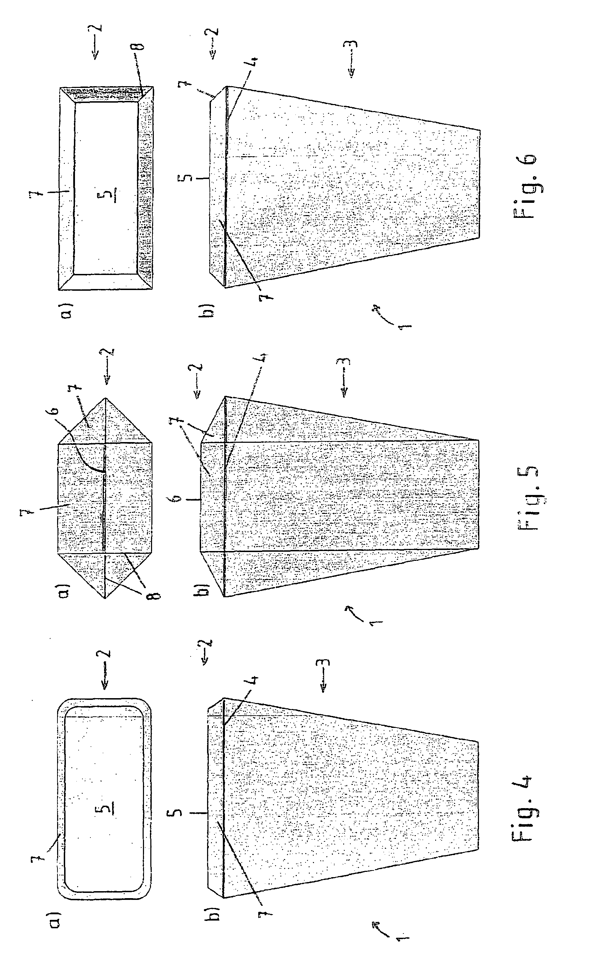

Während das in den Fig. 1 bis 4 und 6 bis 10 dargestellte Oberteil 2 eine Tafel 5 umfasst, die im Abstand, zentral und planparallel über der Rondistenebene angeordnet ist, umfasst das in Fig. 5 dargestellte Oberteil 2 eine Kante 6, die im Abstand, zentral und parallel über der Rondistenebene angeordnet ist.

Zwischen der in den Fig. 1 bis 4 und 6 bis 10 dargestellten Tafel 5 und der Rondiste 4 bzw. zwischen der in Fig. 5 dargestellten Kante 6 und der Rondiste 4 sind jeweils Facetten 7, nämlich begrenzte, schräg zur Rondistenebene verlaufende Flächen, angeordnet.

Es ist deutlich zu erkennen, dass die erfindungsgemäßen Stifte zahlreiche Kanten aufweisen, die zu einer verbesserten Untergrundhaftung und einer längeren Lebensdauer der Spikes führen. Der Stand der Technik wies dagegen immer nur eine umlaufende Kante auf.

Der in Fig. 1 dargestellte Spikestift 1 besitzt eine rechteckige Tafel 5 und eine achteckige Rondistenebene. Unterhalb dieser achteckigen Rondistenebene schließt das Unterteil 3 an, das nach Art eines Pyramidenstumpfes mit achteckiger Grundfläche ausgebildet ist, wobei das sich im Querschnitt verengende Ende des Unterteils 3 von der Rondistenebene weg weist. Das Oberteil 2 umfasst insgesamt acht Facetten 7, wobei vier Facetten 7 dreieckförmig und vier Facetten 7 rechteckförmig ausgebildet sind. Die Facetten 7 sind zwischen Rondiste 4 und der Tafel 5 angeordnet und durch weitere Kanten 8 von einander abgegrenzt.

Der in Fig. 2 dargestellte Spikestift 1 besitzt eine rechteckige Tafel 5 und eine sechseckige Rondistenebene. Unterhalb dieser achteckigen Rondistenebene schließt das Unterteil 3 an, das nach Art eines Pyramidenstumpfes mit sechseckiger Grundfläche ausgebildet ist, wobei das sich im Querschnitt verengende Ende des Unterteils 3 von der Rondistenebene weg weist. Das Oberteil 2 umfasst insgesamt zwei dreieckförmige Facetten 7, die an zwei sich gegenüberliegenden Seiten der rechteckigen Tafel 5 angeordnet sind. Die Facetten 7 verlaufen schräg zur Rondistenebene und sind zwischen Rondiste 4 und der Tafel 5 angeordnet. Die nicht mit Facetten 7 versehenen Seiten der Tafel 5 stehen senkrecht über den entsprechenden Abschnitten der Rondiste 4. Die zwischen diesen Seiten und den entsprechenden Abschnitten der Rondiste 4 angeordneten Flächen 9 bilden also einen rechten Winkel mit der Rondistenebene.

Der in Fig. 3 dargestellte Spikestift 1 besitzt eine quadratische Tafel 5 und eine quadratische Rondistenebene. Unterhalb dieser quadratischen Rondistenebene schließt das Unterteil 3 an, das nach Art eines Pyramidenstumpfes mit quadratischer Grundfläche ausgebildet ist, wobei das sich im Querschnitt verengende Ende des Unterteils 3 von der Rondistenebene weg weist. Das Oberteil 2 umfasst insgesamt vier Facetten 7, die zwischen Rondiste 4 und der Tafel 5 angeordnet und durch weitere Kanten 8 von einander abgegrenzt sind.

Der in Fig. 4 dargestellte Spikestift 1 besitzt eine rechteckige Tafel 5 mit abgerundeten Ecken und eine rechteckige Rondistenebene mit abgerundeten Ecken. Unterhalb dieser Rondistenebene schließt sich das Unterteil 3 an, das im Querschnitt nach unten verengt ist. Das Oberteil 2 umfasst nur eine umlaufende Facetten 7, die zwischen Rondiste 4 und der Tafel 5 angeordnet ist und einen umlaufenden Rand bildet.

Der in Fig. 5 dargestellte Spikestift 1 besitzt eine Kante 6, die im Abstand, zentral und parallel über der durch die sechseckige Rondiste 4 gebildeten Rondistenebene angeordnet ist. Unterhalb dieser quadratischen Rondistenebene schließt das Unterteil 3 an, das nach Art eines Pyramidenstumpfes wie in Fig. 2 ausgebildet ist. Das Oberteil 2 umfasst insgesamt sechs Facetten 7, nämlich zwei rechteckige und vier dreieckige Facetten 7, welche zwischen der sechseckigen Rondiste 4 und der Kante 6 angeordnet und durch weitere Kanten 8 von einander abgegrenzt sind.

Der in Fig. 6 dargestellte Spikestift 1 besitzt eine rechteckige Tafel 5 und eine rechteckige Rondistenebene. Unterhalb dieser Rondistenebene schließt das Unterteil 3 an, das im Querschnitt nach unten verengt ist. Das Oberteil 2 umfasst insgesamt vier Facetten 7, die zwischen Rondiste 4 und der Tafel 5 angeordnet und durch weitere Kanten 8 von einander abgegrenzt sind.

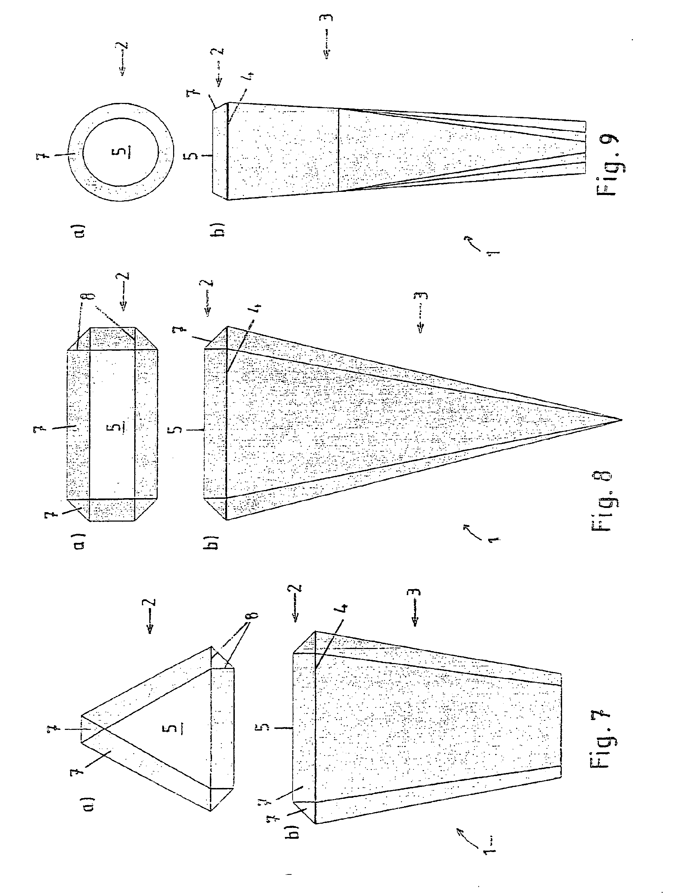

Der in Fig. 7 dargestellte Spikestift 1 besitzt eine dreieckige Tafel 5 und eine sechseckige Rondistenebene. Unterhalb dieser sechseckigen Rondistenebene schließt das Unterteil 3 an, das sich im Querschnitt nach unten hin verengt. Das Oberteil 2 umfasst insgesamt sechs Facetten 7, die zwischen Rondiste 4 und der Tafel 5 angeordnet und durch weitere Kanten 8 von einander abgegrenzt sind.

Der in Fig. 8 dargestellte Spikestift 1 besitzt eine rechteckige Tafel 5 und eine achteckige Rondistenebene. Unterhalb dieser achteckigen Rondistenebene schließt das Unterteil 3 an, das sich im Querschnitt nach unten hin verengt und spitz zuläuft. Das Oberteil 2 umfasst insgesamt acht Facetten 7, nämlich vier rechteckige und vier dreieckige Facetten 7, welche zwischen Rondiste 4 und der Tafel 5 angeordnet und durch weitere Kanten 8 von einander abgegrenzt sind.

Der in Fig. 9 dargestellte Spikestift 1 besitzt eine kreisförmige Tafel 5 und eine kreisförmige Rondistenebene. Unterhalb dieser kreisförmigen Rondistenebene schließt das Unterteil 3 nach Art eines Kegelstumpfes an, der sich im Querschnitt nach unten hin verengt. Das Oberteil 2 umfasst nur eine umlaufende Facette 7, die zwischen Rondiste 4 und der Tafel 5 angeordnet ist und einen umlaufenden Rand bildet.

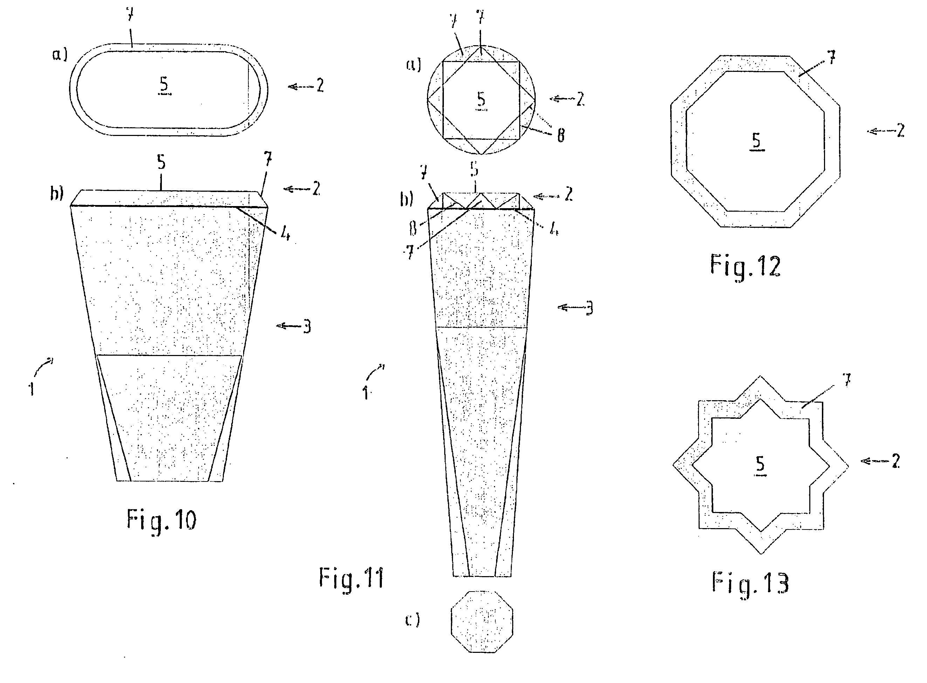

Der in Fig. 10 dargestellte Spikestift 1 besitzt eine ovalförmige Tafel 5 und eine ovalförmige Rondistenebene. Unterhalb dieser ovalförmigen Rondistenebene schließt das Unterteil 3 nach Art eines Kegelstumpfes an, der sich im Querschnitt nach unten hin verengt. Das Oberteil 2 umfasst nur eine umlaufende Facette 7, die zwischen Rondiste 4 und der Tafel 5 angeordnet ist und einen umlaufenden Rand bildet.

In Fig. 11 ist ein erfindungsgemäßer Spikestift in a) Draufsicht auf das Oberteil, in b) Seitenansicht und in c) Draufsicht auf das Unterteil dargestellt. Der Spikestift 1 umfasst eine Rondiste 4, die den Spikestift 1 in Oberteil 2 und Unterteil 3 teilt. Das Oberteil 2 umfasst eine Tafel 5, die im Abstand, zentral und planparallel über der Rondistenebene angeordnet ist. Zwischen der Tafel 5 und der Rondiste 4 sind Facetten 7, nämlich begrenzte, schräg zur Rondistenebene verlaufende Flächen, angeordnet.

Der Spikestift 1 besitzt eine achteckige Tafel 5 und eine kreisförmige Rondistenebene. Unterhalb dieser kreisförmigen Rondistenebene schließt das Unterteil 3 nach Art eines Kegelstumpfes an, der sich im Querschnitt nach unten hin verengt, wobei die Rondistenebene quasi die Grundfläche des Kegelstumpfes bildet. Der zunächst kreisförmige Querschnitt geht nach unten hin in einen achteckigen Querschnitt über, der in c) dargestellt ist. Das Oberteil 2 umfasst sechzehn Facetten 7, die zwischen Rondiste 4 und der Tafel 5 angeordnet und durch weitere Kanten 8 voneinander abgegrenzt sind.

In den Fig. 12 bis 13 ist jeweils ein erfindungsgemäßer Spikestift in Draufsicht auf das Oberteil 2 dargestellt.

Der in Fig. 12 dargestellte Spikestift besitzt eine achteckige Tafel 5 und eine achteckige Rondiste 4 bzw. Rondistenebene. Das Oberteil 2 umfasst eine umlaufende Facette 7, die zwischen Rondiste 4 und der Tafel 5 angeordnet ist und einen umlaufenden Rand bildet.

Der in Fig. 13 dargestellte Spikestift besitzt eine sternförmige Tafel 5 und eine sternförmige Rondiste 4. Das Oberteil 2 umfasst eine umlaufende Facette 7, die zwischen Rondiste 4 und der Tafel 5 angeordnet ist und einen umlaufenden Rand bildet.

Es ist selbstverständlich, dass die Erfindung nicht auf die in den Fig. 1 bis 13 dargestellten Formen der Rondiste 4, Tafel 5 oder Facetten 7 beschränkt ist. Auch die Anzahl der Facetten 7 kann variieren. Durch die Erfindung wird erreicht, dass die Anzahl der für den Untergrundgriff erforderlichen Kanten gegenüber dem Stand der Technik erhöht wird. Durch die größere Anzahl der Kanten wird insgesamt die Kantenlänge erhöht, auf die sich die Abnutzung des Spikestiftes aufteilt. Die hat wiederum eine längere Lebensdauer und Haltbarkeit der Spikes zur Folge.

### Bezugszeichenliste

### (ist Bestandteil der Beschreibung)

- 1: Spikestift
- 2: Oberteil
- 3: Unterteil
- 4: Rondiste
- 5: Tafel
- 6: Kante
- 7: Facette
- 8: Kante
- 9: Fläche

## Patentansprüche

1. Spikestift (1), der zur Bildung eines Spikes in einen Spikekörper einbringbar ist, bestehend aus einem Oberteil (2) und einem Unterteil (3), wobei das Oberteil (2) nach dem Einbringen des Spikestiftes (1) in den Spikekörper die Spitze des Spikes bildet, wobei eine Rondiste (4) den Spikestift (1) in Oberteil (2) und Unterteil (3) teilt, wobei das Oberteil (2) eine Tafel (5), eine Kante (6) oder eine Spitze umfasst, die im Abstand über der Rondistenebene angeordnet ist, und wobei zwischen Tafel (5), Kante (6) oder Spitze und der Rondiste (4) wenigstens eine Facette (7) ausgebildet ist, **dadurch gekennzeichnet, dass** das Unterteil (3) ausgehend von der Rondistenebene nach unten spitz zuläuft und dass das Unterteil (3) nach Art eines Kegels, eines Kegelstumpfes, einer Pyramide oder eines Pyramidenstumpfes ausgebildet ist, wobei das sich im Querschnitt verengende Ende des Unterteils (3) von der Rondistenebene weg weist.

2. Spikestift (1) nach Anspruch 1, **dadurch gekennzeichnet, dass** die Tafel (5), Kante (6) oder Spitze zentral über der Rondistenebene angeordnet ist.

3. Spikestift (1) nach Anspruch 1 oder 2, **dadurch gekennzeichnet, dass** die Tafel (5) planparallel und die Kante (6) parallel zur Rondistenebene angeordnet ist.

4. Spikestift (1) nach einem der Ansprüche 1 bis 3, **dadurch gekennzeichnet, dass** die Tafel (5) kreisförmig, elliptisch, dreieckig, quadratisch, rechteckig, sechseckig, vieleckig oder sternförmig ist.

5. Spikestift (1) nach einem der Ansprüche 1 bis 4, **dadurch gekennzeichnet, dass** die Rondistenebene kreisförmig, elliptisch, dreieckig, quadratisch, rechteckig, sechseckig, vieleckig oder sternförmig ist.

6. Spikestift (1) nach einem der Ansprüche 1 bis 5, **dadurch gekennzeichnet, dass** die Facetten (7) kreisförmig, elliptisch, dreieckig, quadratisch, rechteckig, sechseckig oder vieleckig sind.

## Claims

1. Spike pin (1), which can be introduced into a spike body to form a spike, said spike pin comprising an upper part (2) and a lower part (3), the upper part (2) forming the tip of the spike after the spike pin (1) has been introduced into the spike body, a girdle (4) dividing the spike pin (1) into the upper part (2) and the lower part (3), the upper part (2) comprising a plate (5), an edge (6) or a tip, which is arranged at a distance above the plane of the girdle, and at least one facet (7) being formed between the plate (5), the edge (6) or the tip and the girdle (4), **characterized in that** the lower part (3) tapers downwards to a point from the plane of the girdle and **in that** the lower part (3) is formed in the manner of a cone, a truncated cone, a pyramid or a truncated pyramid, the cross-sectionally narrowing end of the lower part (3) facing away from the plane of the girdle.

2. Spike pin (1) according to Claim 1, **characterized in that** the plate (5), the edge (6) or the tip is arranged centrally above the plane of the girdle.

3. Spike pin (1) according to Claim 1 or 2, **characterized in that** the plate (5) is arranged plane-parallel and the edge (6) is arranged parallel to the plane of the girdle.

4. Spike pin (1) according to one of Claims 1 to 3, **characterized in that** the plate (5) is circular, elliptical, triangular, quadratic, rectangular, hexagonal, polygonal or star-shaped.

5. Spike pin (1) according to one of Claims 1 to 4, **characterized in that** the plane of the girdle is circular, elliptical, triangular, quadratic, rectangular, hexagonal, polygonal or star-shaped.

6. Spike pin (1) according to one of Claims 1 to 5, **characterized in that** the facets (7) are circular, elliptical, triangular, quadratic, rectangular, hexagonal or polygonal.

## Revendications

1. Tige de crampon (1) qui peut être insérée dans un corps de crampon pour former un crampon, constituée d'une partie supérieure (2) et d'une partie inférieure (3), la partie supérieure (2) formant la pointe du crampon lorsque la tige de crampon (1) a été insérée dans le corps de crampon, une arête périphérique (4) divisant la tige de crampon (1) en une partie supérieure (2) et une partie inférieure (3), la partie supérieure (2) comprenant une table (5), une arête (6) ou une pointe disposées à distance au-dessus du plan de l'arête périphérique, au moins une facette (7) étant formée entre la table (5), l'arête (6) ou la pointe et l'arête (4), **caractérisée en ce que** la partie inférieure (3) converge en pointe vers le bas partant du plan de l'arête périphérique et **en ce que** la partie inférieure (3) est configurée en cône, en tronc de cône, en pyramide ou en tronc de pyramide, l'extrémité de section transversale rétrécie de la partie inférieure (3) n'étant pas tournée vers le plan de l'arête périphérique.

2. Tige de crampon (1) selon la revendication 1, **caractérisée en ce que** la table (5), l'arête (6) ou la pointe sont disposées au-dessus du centre du plan de l'arête périphérique.

3. Tige de crampon (1) selon les revendications 1 ou 2, **caractérisée en ce que** la table (5) et l'arête (6) sont parallèles au plan de l'arête périphérique.

4. Tige de crampon (1) selon l'une des revendications 1 à 3, **caractérisée en ce que** la table (5) a une forme circulaire, elliptique, triangulaire, carrée, rectangulaire, hexagonale, polygonale ou en étoile.

5. Tige de crampon (1) selon l'une des revendications 1 à 4, **caractérisée en ce que** le plan de l'arête périphérique est circulaire, elliptique, triangulaire, carré, rectangulaire, hexagonal, polygonal ou en étoile.

6. Tige de crampon (1) selon l'une des revendications 1 à 5, **caractérisée en ce que** les facettes (7) sont circulaires, elliptiques, triangulaires, carrées, rectangulaires, hexagonales ou polygonales.
